# EUROPEAN PATENT APPLICATION

(11) **EP 4 510 485 A1**
(43) Date of publication of application: **19.02.2025**
(21) Application number: 23787658.6
(22) Date of filing: 11.04.2023
(51) Int. Cl.: H04L 5/00

(54) **HYBRID AUTOMATIC REPEAT REQUEST ACKNOWLEDGEMENT FEEDBACK METHOD, TERMINAL AND NETWORK-SIDE DEVICE**

(30) Priority: 11.04.2022 CN 202210377425
(71) Applicant: Vivo Mobile Communication Co., Ltd., Dongguan, Guangdong 523863 (CN)
(72) Inventor: LI, Na, Dongguan, Guangdong 523863 (CN)
(74) Representative: Murgitroyd & Company
(86) International application number: PCT/CN2023/087461
(87) International publication number: WO 2023/198014

(57) **Abstract**

This application discloses a hybrid automatic repeat request acknowledgement feedback method, a terminal, and a network-side device. The method in embodiments of this application includes: in a case that a first channel resource for a unicast HARQ-ACK is not configured for a terminal, feeding back, by the terminal by using a target channel resource for a multicast HARQ-ACK, the unicast HARQ-ACK and the multicast HARQ-ACK or feeding back the multicast HARQ-ACK to a network-side device; or in a case that the first channel resource for the unicast HARQ-ACK is not configured for the terminal, feeding back, by the terminal by using a second channel resource for the unicast HARQ-ACK, the unicast HARQ-ACK and the multicast HARQ-ACK or feeding back the unicast HARQ-ACK to the network-side device; where the unicast HARQ-ACK and the multicast HARQ-ACK have a same priority and are fed back in a same time unit, and the first channel resource and the second channel resource are configured based on different configuration parameters.

## Description

### CROSS-REFERENCE TO RELATED APPLICATIONS

This application claims priority to Chinese Patent Application No. 202210377425.9, filed on April 11, 2022 and entitled "HYBRID AUTOMATIC REPEAT REQUEST ACKNOWLEDGEMENT FEEDBACK METHOD, TERMINAL, AND NETWORK-SIDE DEVICE", which is incorporated herein by reference in its entirety.

### TECHNICAL FIELD

This application pertains to the field of communications technologies, and specifically relates to a hybrid automatic repeat request acknowledgement feedback method, a terminal, and a network-side device.

### BACKGROUND

At present, when a base station schedules unicast HARQ-ACKs and multicast HARQ-ACKs with the same priority to be fed back in a same time unit (such as a slot or subslot), a terminal can multiplex unicast HARQ-ACKs and multicast HARQ-ACKs on one physical uplink control channel (Physical Uplink Control Channel, PUCCH) resource to feed back to the base station, such as an SPS-PUCCH resource configured in a unicast HARQ-ACK resource list SPS-PUCCH-AN-List.

However, configuration of the unicast HARQ-ACK resource list is optional. If the unicast HARQ-ACK resource list is not configured, how to select PUCCH resources to feed back unicast HARQ-ACKs and/or multicast HARQ-ACKs in this case is a technical problem that needs to be resolved urgently by persons skilled in the art.

### SUMMARY

Embodiments of this application provide a hybrid automatic repeat request acknowledgement feedback method, a terminal, and a network-side device, which can resolve the problem of how to select PUCCH resources to feed back unicast HARQ-ACKs and/or multicast HARQ-ACKs in a case that a unicast HARQ-ACK resource list is not configured.

According to a first aspect, a hybrid automatic repeat request acknowledgement HARQ-ACK feedback method is provided, applied to a terminal, and the method includes:
in a case that a first channel resource for a unicast HARQ-ACK is not configured for a terminal, feeding back, by the terminal by using a target channel resource for a multicast HARQ-ACK, the unicast HARQ-ACK and the multicast HARQ-ACK or feeding back the multicast HARQ-ACK to a network-side device; or
in a case that the first channel resource for the unicast HARQ-ACK is not configured for the terminal, feeding back, by the terminal by using a second channel resource for the unicast HARQ-ACK, the unicast HARQ-ACK and the multicast HARQ-ACK or feeding back the unicast HARQ-ACK to the network-side device; where
the unicast HARQ-ACK and the multicast HARQ-ACK have a same priority and are fed back in a same time unit, and the first channel resource and the second channel resource are configured based on different configuration parameters.

According to a second aspect, a hybrid automatic repeat request acknowledgement HARQ-ACK feedback method is provided, applied to a network-side device, and the method includes:
receiving, by a network-side device, a unicast HARQ-ACK and a multicast HARQ-ACK that are fed back or a multicast HARQ-ACK fed back by a terminal by using a target channel resource for the multicast HARQ-ACK, where the unicast HARQ-ACK and the multicast HARQ-ACK, or the multicast HARQ-ACK are fed back in a case that a first channel resource for the unicast HARQ-ACK is not configured for the terminal; or
receiving, by the network-side device, a unicast HARQ-ACK and a multicast HARQ-ACK that are fed back or a unicast HARQ-ACK fed back by the terminal by using a second channel resource for the unicast HARQ-ACK, where the unicast HARQ-ACK and the multicast HARQ-ACK, or the unicast HARQ-ACK are fed back in a case that the first channel resource for the unicast HARQ-ACK is not configured for the terminal; where
the unicast HARQ-ACK and the multicast HARQ-ACK have a same priority and are fed back in a same time unit, and the first channel resource and the second channel resource are configured based on different configuration parameters.

According to a third aspect, a hybrid automatic repeat request acknowledgement HARQ-ACK feedback apparatus is provided, applied to a terminal, and the apparatus includes:
a feedback module, configured to: in a case that a first channel resource for a unicast HARQ-ACK is not configured for a terminal, feed back, by using a target channel resource for a multicast HARQ-ACK, the unicast HARQ-ACK and the multicast HARQ-ACK or feed back the multicast HARQ-ACK to a network-side device; or
in a case that the first channel resource for the unicast HARQ-ACK is not configured for the terminal, feed back, by using a second channel resource for the unicast HARQ-ACK, the unicast HARQ-ACK and the multicast HARQ-ACK or feed back the unicast HARQ-ACK to the network-side device; where
the unicast HARQ-ACK and the multicast HARQ-ACK have a same priority and are fed back in a same time unit, and the first channel resource and the second channel resource are configured based on different configuration parameters.

According to a fourth aspect, a hybrid automatic repeat request acknowledgement HARQ-ACK feedback apparatus is provided, applied to a network-side device, and the apparatus includes:
a receiving module, configured to receive a unicast HARQ-ACK and a multicast HARQ-ACK that are fed back or a multicast HARQ-ACK fed back by a terminal by using a target channel resource for the multicast HARQ-ACK, where the unicast HARQ-ACK and the multicast HARQ-ACK, or the multicast HARQ-ACK are fed back in a case that a first channel resource for the unicast HARQ-ACK is not configured for the terminal; or
receive a unicast HARQ-ACK and a multicast HARQ-ACK that are fed back or a unicast HARQ-ACK fed back by the terminal by using a second channel resource for the unicast HARQ-ACK, where the unicast HARQ-ACK and the multicast HARQ-ACK, or the unicast HARQ-ACK are fed back in a case that the first channel resource for the unicast HARQ-ACK is not configured for the terminal; where
the unicast HARQ-ACK and the multicast HARQ-ACK have a same priority and are fed back in a same time unit, and the first channel resource and the second channel resource are configured based on different configuration parameters.

According to a fifth aspect, a terminal is provided, where the terminal includes a processor and a memory, and a program or instructions capable of running on the processor are stored in the memory. When the program or the instructions are executed by the processor, the steps of the method according to the first aspect are implemented.

According to a sixth aspect, a network-side device is provided, where the network-side device includes a processor and a memory, and a program or instructions capable of running on the processor are stored in the memory. When the program or the instructions are executed by the processor, the steps of the method according to the second aspect are implemented.

According to a seventh aspect, a communication system is provided, including a terminal and a network-side device, where the terminal can be configured to execute the steps of the hybrid automatic repeat request acknowledgement HARQ-ACK feedback method according to the first aspect, and the network-side device can be configured to execute the steps of the hybrid automatic repeat request acknowledgement HARQ-ACK feedback method according to the second aspect.

According to an eighth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to a ninth aspect, a chip is provided, where the chip includes a processor and a communication interface, the communication interface is coupled to the processor, and the processor is configured to run a program or instructions to implement the method according to the first aspect or implement the method according to the second aspect.

According to a tenth aspect, a computer program/program product is provided, where the computer program/program product is stored in a storage medium, and the computer program/program product is executed by at least one processor to implement the steps of the hybrid automatic repeat request acknowledgement HARQ-ACK method according to the first aspect or the steps of the method according to the second aspect.

In the embodiments of this application, in a case that the network-side device schedules the unicast HARQ-ACK and the multicast HARQ-ACK with the same priority to be fed back in the same time unit, and the first channel resource for the unicast HARQ-ACK is not configured for the terminal, the terminal may feed back the unicast HARQ-ACK and the multicast HARQ-ACK to the network-side device or feed back the multicast HARQ-ACK by using the target channel resource for the multicast HARQ-ACK; or the terminal may feed back the unicast HARQ-ACK and the multicast HARQ-ACK to the network-side device or feed back the unicast HARQ-ACK by using the second channel resource for the unicast HARQ-ACK. In the embodiments, in a case that the network-side device schedules unicast HARQ-ACK and multicast HARQ-ACK with a same priority to be fed back in a same time unit, and the first channel resource for the unicast HARQ-ACK is not configured for the terminal, different feedback modes can be selected to feed back the unicast HARQ-ACK and/or the multicast HARQ-ACK, thus implementing HARQ-ACK feedback, improving the reliability of communication, and featuring greater flexibility.

### BRIEF DESCRIPTION OF DRAWINGS

FIG. 1 is a block diagram of a wireless communication system to which the embodiments of this application are applicable;
FIG. 2 is a first schematic flowchart of a hybrid automatic repeat request acknowledgement feedback method according to an embodiment of this application;
FIG. 3 is a second schematic flowchart of a hybrid automatic repeat request acknowledgement feedback method according to an embodiment of this application;
FIG. 4 is a first schematic structural diagram of a hybrid automatic repeat request acknowledgement feedback apparatus according to an embodiment of this application;
FIG. 5 is a second schematic structural diagram of a hybrid automatic repeat request acknowledgement feedback apparatus according to an embodiment of this application;
FIG. 6 is a schematic structural diagram of a communication device according to an embodiment of this application;
FIG. 7 is a schematic diagram of a hardware structure of a terminal according to an embodiment of this application; and
FIG. 8 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

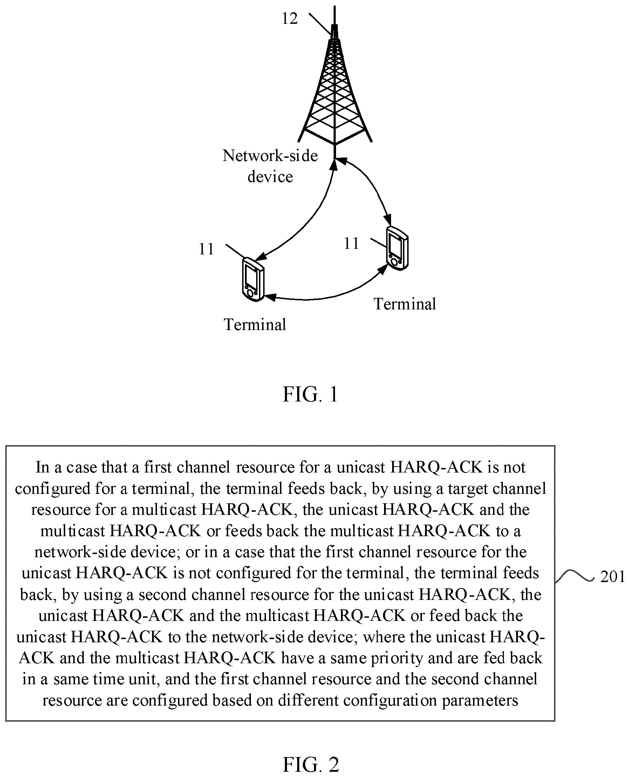

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point or a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

First, after a base station transmits a physical downlink shared channel (Physical Downlink Shared Channel, PDSCH) or a physical downlink control channel (Physical Downlink Control Channel, PDCCH) (for example, as a PDCCH indicating release of a semi-static PDSCH), a terminal needs to feed back a PDSCH/PDCCH decoding result to the base station after completing reception and decoding to tell the base station whether the PDSCH/semi-static PDSCH has been successfully decoded, and releases the PDCCH. According to the feedback, the base station makes next scheduling decision. Such procedure is called hybrid automatic repeat request (Hybrid Automatic Repeat request, HARQ).

In a HARQ-ACK/NACK feedback mode, if the terminal successfully decodes PDSCH/PDCCH, an ACK is fed back; otherwise, a NACK is fed back. In a HARQ NACK only feedback mode, the terminal feeds back an NACK in a case of failure in decoding the PDSCH/PDCCH, and does not feed back any information at other times.

The following describes in detail a hybrid automatic repeat request acknowledgement feedback method provided in the embodiments of this application by using some embodiments and application scenarios thereof with reference to the accompanying drawings.

FIG. 2 is a first schematic flowchart of a hybrid automatic repeat request acknowledgement feedback method according to an embodiment of this application. As shown in FIG. 2, the hybrid automatic repeat request acknowledgement feedback method provided in this embodiment includes the following steps.

Step 201: In a case that a first channel resource for a unicast HARQ-ACK is not configured for a terminal, a terminal feeds back, by using a target channel resource for a multicast HARQ-ACK, the unicast HARQ-ACK and the multicast HARQ-ACK or feeds back the multicast HARQ-ACK to a network-side device; or
in a case that the first channel resource for the unicast HARQ-ACK is not configured for the terminal, the terminal feeds back, by using a second channel resource for the unicast HARQ-ACK, the unicast HARQ-ACK and the multicast HARQ-ACK or feed back the unicast HARQ-ACK to the network-side device; where
the unicast HARQ-ACK and the multicast HARQ-ACK have a same priority and are fed back in a same time unit, and the first channel resource and the second channel resource are configured based on different configuration parameters.

Specifically, the first channel resource and the second channel resource for the unicast HARQ-ACK are configured based on different configuration parameters. For example, the first channel resource for the unicast HARQ-ACK may be a PUCCH resource in a PUCCH resource list configured by a configuration parameter SPS-PUCCH-AN-List, and the second channel resource for the unicast HARQ-ACK may be a PUCCH resource configured by a configuration parameter n1PUCCH-AN.

Optionally, the target channel resource for the multicast HARQ-ACK may include a third channel resource corresponding to the multicast dynamic HARQ-ACK, a fourth channel resource corresponding to the multicast semi-persistent scheduling HARQ-ACK, and a fifth channel resource. The third channel resource, the fourth channel resource, or the fifth channel resource is configured based on different configuration parameters. For example, the third channel resource corresponding to the multicast dynamic HARQ-ACK may be a PUCCH resource in a PUCCH resource list configured by a configuration parameter pucch-ConfigurationList-Multicast1 or pucch-ConfigurationList-Multicast2. The fourth channel resource corresponding to the multicast semi-persistent scheduling HARQ-ACK may be a PUCCH resource in a PUCCH resource list configured by a configuration parameter SPS-PUCCH-AN-List-Multicast. The fifth channel resource may be a PUCCH resource configured by a configuration parameter n1PUCCH-AN.

Optionally, in a case that the multicast HARQ-ACK includes a HARQ-ACK with a feedback mode being an ACK/NACK mode, the third channel resource corresponding to the multicast dynamic HARQ-ACK is used, where the third channel resource may be a PUCCH resource in a PUCCH resource list configured by the configuration parameter pucch-ConfigurationList-Multicast1, and the configured PUCCH resource may be terminal-specific because the feedback mode is the ACK/NACK mode. In a case that the feedback mode for the multicast HARQ-ACK is NACK only, the third channel resource corresponding to the multicast dynamic HARQ-ACK is used, where the third channel resource may be a PUCCH resource in a PUCCH resource list configured by the configuration parameter pucch-ConfigurationList-Multicast2.

The time unit may be a slot, a sub-slot, a subframe, a frame, an OFDM symbol set, or the like.

Because configuring the first channel resource for the unicast HARQ-ACK for the terminal is optional when the network-side device schedules the unicast HARQ-ACK and the multicast HARQ-ACK with the same priority to be fed back in the same time unit, if the first channel resource for the unicast HARQ-ACK is not configured for the terminal, the unicast HARQ-ACK and/or the multicast HARQ-ACK cannot be fed back to the network-side device by using the first channel resource for the unicast HARQ-ACK. In this step, in a case that the first channel resource for the unicast HARQ-ACK is not configured for the terminal, the terminal may feed back the unicast HARQ-ACK and the multicast HARQ-ACK or feed back the multicast HARQ-ACK to the network-side device by using the target channel resource for the multicast HARQ-ACK; or the terminal may feed back the unicast HARQ-ACK and the multicast HARQ-ACK or feed back the unicast HARQ-ACK to the network-side device by using the second channel resource for the unicast HARQ-ACK.

In this embodiment, in a case that the network-side device schedules unicast HARQ-ACK and multicast HARQ-ACK with a same priority to be fed back in a same time unit, and the first channel resource for the unicast HARQ-ACK is not configured for the terminal, a plurality of different feedback modes can be selected to feed back the unicast HARQ-ACK and/or the multicast HARQ-ACK, thus implementing HARQ-ACK feedback, improving the reliability of communication, and featuring greater flexibility.

In an embodiment, that the terminal feeds back the unicast HARQ-ACK and the multicast HARQ-ACK to the network-side device by using the second channel resource for the unicast HARQ-ACK in the foregoing step 201 includes: multiplexing, by the terminal, the unicast HARQ-ACK and the multicast HARQ-ACK onto the second channel resource for the unicast HARQ-ACK to feed back to the network-side device, in a case that the total number of bits of the unicast HARQ-ACK and the multicast HARQ-ACK is less than or equal to a preset number of bits.

Specifically, the preset number of bits may be 2 bits, for example, the second channel resource for the unicast HARQ-ACK can transmit at most 2 bits, so when the total number of bits of the unicast HARQ-ACK and the multicast HARQ-ACK is equal to 2 bits, the terminal may use a feedback mode of multiplexing the unicast HARQ-ACK and the multicast HARQ-ACK onto the second channel resource for the unicast HARQ-ACK to feed back to the network-side device.

In this embodiment, in a case that the network-side device schedules the unicast HARQ-ACK and the multicast HARQ-ACK with the same priority to be fed back in the same time unit, and the first channel resource for the unicast HARQ-ACK is not configured for the terminal, if the total number of bits of the unicast HARQ-ACK and the multicast HARQ-ACK is less than or equal to the preset number of bits, the terminal may use a feedback mode of multiplexing the unicast HARQ-ACK and the multicast HARQ-ACK onto the second channel resource for the unicast HARQ-ACK to feed back to the network-side device, thus implementing HARQ-ACK feedback and improving the reliability of communication.

Optionally, the multiplexing, by the terminal, the unicast HARQ-ACK and the multicast HARQ-ACK onto the second channel resource for the unicast HARQ-ACK to feed back to the network-side device, in a case that the total number of bits of the unicast HARQ-ACK and the multicast HARQ-ACK is less than or equal to a preset number of bits includes: in a case that a third channel resource corresponding to a multicast dynamic HARQ-ACK and/or a fourth channel resource corresponding to a multicast semi-persistent scheduling HARQ-ACK is configured for the terminal and the total number of bits of the unicast HARQ-ACK and the multicast HARQ-ACK is less than or equal to the preset number of bits, multiplexing, by the terminal, the unicast HARQ-ACK and the multicast HARQ-ACK onto the second channel resource for the unicast HARQ-ACK to feed back to the network-side device.

Specifically, because the third channel resource corresponding to the multicast dynamic HARQ-ACK and/or the fourth channel resource corresponding to the multicast semi-persistent scheduling HARQ-ACK is not configured for the terminal, the terminal cannot multiplex the unicast HARQ-ACK and the multicast HARQ-ACK onto the third channel resource or the fourth channel resource to feed back to the network-side device. In this case, the preset number of bits may be 2 bits. If the total number of bits of the unicast HARQ-ACK and the multicast HARQ-ACK is equal to 2 bits, the terminal may multiplex the unicast HARQ-ACK and the multicast HARQ-ACK onto the second channel resource for the unicast HARQ-ACK to feed back to the network-side device.

In this embodiment, in a case that the network-side device schedules the unicast HARQ-ACK and the multicast HARQ-ACK with the same priority to be fed back in the same time unit, and the first channel resource for the unicast HARQ-ACK and the third channel resource corresponding to the multicast dynamic HARQ-ACK and/or the fourth channel resource corresponding to the multicast semi-persistent scheduling HARQ-ACK are not configured for the terminal, if the total number of bits of the unicast HARQ-ACK and the multicast HARQ-ACK is less than or equal to the preset number of bits, the terminal may use a feedback mode of multiplexing the unicast HARQ-ACK and the multicast HARQ-ACK onto the second channel resource for the unicast HARQ-ACK to feed back to the network-side device, thus implementing HARQ-ACK feedback and improving the reliability of communication.

In an embodiment, that the terminal feeds back, by using the second channel resource for the unicast HARQ-ACK, the unicast HARQ-ACK to the network-side device in the step 201 includes: discarding, by the terminal, the multicast HARQ-ACK and feeding back the unicast HARQ-ACK to the network-side device by using the second channel resource for the unicast HARQ-ACK, in at least one of the following cases: 1. in a case that the third channel resource corresponding to the multicast dynamic HARQ-ACK and/or the fourth channel resource corresponding to the multicast semi-persistent scheduling HARQ-ACK is not configured for the terminal; 2. in a case that the total number of bits of the unicast HARQ-ACK and the multicast HARQ-ACK is greater than the preset number of bits; and 3. in a case that the number of bits of the unicast HARQ-ACK is greater than or equal to the number of bits of the multicast HARQ-ACK.

Specifically, in the foregoing case 1, because the third channel resource corresponding to the multicast dynamic HARQ-ACK and/or the fourth channel resource corresponding to the multicast semi-persistent scheduling HARQ-ACK is not configured for the terminal, the terminal cannot multiplex the unicast HARQ-ACK and the multicast HARQ-ACK onto the third channel resource or the fourth channel resource to feed back to the network-side device. In this case, the terminal may choose a feedback mode of discarding the multicast HARQ-ACK and feeding back the unicast HARQ-ACK to the network-side device by using the second channel resource for the unicast HARQ-ACK.

In the foregoing case 2, the preset number of bits may be 2 bits. Because the total number of bits of the unicast HARQ-ACK and the multicast HARQ-ACK is greater than 2 bits, assuming that the second channel resource for the unicast HARQ-ACK can transmit at most 2 bits, in this case, the terminal may choose a feedback mode of discarding the multicast HARQ-ACK and feeding back the unicast HARQ-ACK to the network-side device by using the second channel resource for the unicast HARQ-ACK.

In the foregoing case 3, if the number of bits of the unicast HARQ-ACK is greater than or equal to the number of bits of the multicast HARQ-ACK, the terminal may choose a feedback mode of discarding the multicast HARQ-ACK with a smaller number of bits and feeding back the unicast HARQ-ACK to the network-side device by using the second channel resource for the unicast HARQ-ACK.

In this embodiment, in a case that the network-side device schedules the unicast HARQ-ACK and the multicast HARQ-ACK with the same priority to be fed back in the same time unit, and the first channel resources of the unicast HARQ-ACK is not configured for the terminal, in at least one of the foregoing cases, the terminal may choose a feedback mode of discarding the multicast HARQ-ACK and feeding back the unicast HARQ-ACK to the network-side device by using the second channel resource for the unicast HARQ-ACK, thus implementing HARQ-ACK feedback and improving the reliability of communication.

In an embodiment, that the terminal feeds back the unicast HARQ-ACK and the multicast HARQ-ACK to the network-side device by using the target channel resource for the multicast HARQ-ACK in the foregoing step 201 includes: multiplexing, by the terminal, the unicast HARQ-ACK and the multicast HARQ-ACK onto the target channel resource for the multicast HARQ-ACK to feed back to the network-side device, where the target channel resource is determined based on the total number of bits of the unicast HARQ-ACK and the multicast HARQ-ACK.

Specifically, the target channel resource is determined from a configured resource list based on the total number of bits of the unicast HARQ-ACK and the multicast HARQ-ACK. In this embodiment, in a case that the network-side device schedules the unicast HARQ-ACK and the multicast HARQ-ACK with the same priority to be fed back in the same time unit, and the first channel resource for the unicast HARQ-ACK is not configured for the terminal, in at least one of the above cases, the terminal may alternatively use a feedback mode of multiplexing the unicast HARQ-ACK and the multicast HARQ-ACK to the target channel resource for the multicast HARQ-ACK to feed back to the network-side device, thus implementing HARQ-ACK feedback and improving the reliability of communication.

Optionally, that the terminal multiplexes the unicast HARQ-ACK and the multicast HARQ-ACK onto the target channel resource for the multicast HARQ-ACK to feed back to the network-side device includes: in a case that the total number of bits of the unicast HARQ-ACK and the multicast HARQ-ACK is greater than the preset number of bits, the terminal multiplexes the unicast HARQ-ACK and the multicast HARQ-ACK onto the target channel resource for the multicast HARQ-ACK to feed back to the network-side device.

Specifically, the preset number of bits may be 2 bits, and the unicast HARQ-ACK and the multicast HARQ-ACK with the total number of bits being greater than 2 bits cannot be transmitted by using the second channel resource for the unicast HARQ-ACK; and the terminal may alternatively multiplex the unicast HARQ-ACK and the multicast HARQ-ACK onto the target channel resource for the multicast HARQ-ACK to feed back to the network-side device.

In this embodiment, in a case that the network-side device schedules the unicast HARQ-ACK and the multicast HARQ-ACK with the same priority to be fed back in the same time unit, and the first channel resource for the unicast HARQ-ACK is not configured for the terminal, if the total number of bits of the unicast HARQ-ACK and the multicast HARQ-ACK is greater than the preset number of bits, the terminal may use a feedback mode of multiplexing the unicast HARQ-ACK and the multicast HARQ-ACK onto the target channel resource for the multicast HARQ-ACK to feed back to the network-side device, thus implementing HARQ-ACK feedback and improving the reliability of communication.

Optionally, the target channel resource includes the third channel resource corresponding to the multicast dynamic HARQ-ACK and/or the fourth channel resource corresponding to the multicast semi-persistent scheduling HARQ-ACK. That the terminal multiplexes the unicast HARQ-ACK and the multicast HARQ-ACK onto the target channel resource for the multicast HARQ-ACK to feed back to the network-side device includes: in a case that the multicast HARQ-ACK includes the multicast dynamic HARQ-ACK, multiplexing, by the terminal, the unicast HARQ-ACK and the multicast HARQ-ACK onto the third channel resource corresponding to the multicast dynamic HARQ-ACK to feed back to the network-side device; or in a case that the multicast HARQ-ACK includes only the multicast semi-persistent scheduling HARQ-ACK, multiplexing, by the terminal, the unicast HARQ-ACK and the multicast HARQ-ACK onto the fourth channel resource corresponding to the multicast semi-persistent scheduling HARQ-ACK to feed back to the network-side device.

Specifically, in a case that the multicast HARQ-ACK includes the multicast dynamic HARQ-ACK, the third channel resource corresponding to the multicast dynamic HARQ-ACK is used, where the third channel resource may be a PUCCH resource in a PUCCH resource list configured by the configuration parameter pucch-ConfigurationList-Multicast1 or pucch-ConfigurationList-Multicast2. In a case that the multicast HARQ-ACK includes only the multicast semi-persistent scheduling HARQ-ACK, the fourth channel resource corresponding to the multicast semi-persistent scheduling HARQ-ACK is used, where the fourth channel resource may be a PUCCH resource in a PUCCH resource list configured by the configuration parameter SPS-PUCCH-AN-List-Multicast. In a case that the multicast HARQ-ACK includes the multicast dynamic HARQ-ACK, the target channel resource configured by the terminal is the third channel resource, and the terminal may use a feedback mode of multiplexing the unicast HARQ-ACK and the multicast HARQ-ACK onto the third channel resource to feed back to the network-side device. In a case that the multicast HARQ-ACK includes only the multicast semi-persistent scheduling HARQ-ACK, the target channel resource configured by the terminal is the fourth channel resource, and the terminal may use a feedback mode of multiplexing the unicast HARQ-ACK and the multicast HARQ-ACK onto the fourth channel resource to feed back to the network-side device.

In this embodiment, when the network-side device schedules the unicast HARQ-ACK and the multicast HARQ-ACK with the same priority to be fed back in the same time unit, and the first channel resource for the unicast HARQ-ACK is not configured for the terminal, if the multicast HARQ-ACK includes the multicast dynamic HARQ-ACK, the terminal may use a feedback mode of multiplexing the unicast HARQ-ACK and the multicast HARQ-ACK onto the third channel resource to feed back to the network-side device; and if the multicast HARQ-ACK includes only the multicast semi-persistent scheduling HARQ-ACK, the terminal may use a feedback mode of multiplexing the unicast HARQ-ACK and the multicast HARQ-ACK to the fourth channel resource to feed back to the network-side device, thus implementing HARQ-ACK feedback and improving the reliability of communication.

In an embodiment, the target channel resource includes: a fifth channel resource; the fifth channel resource and the third channel resource corresponding to the multicast dynamic HARQ-ACK, or the fifth channel resource and the fourth channel resource corresponding to the multicast semi-persistent scheduling HARQ-ACK are configured based on different configuration parameters. That the terminal feeds back, by using the target channel resource for the multicast HARQ-ACK, the multicast HARQ-ACK to the network-side device in the step 201 includes: discarding, by the terminal, the unicast HARQ-ACK and feeding back the multicast HARQ-ACK to the network-side device by using the fifth channel resource for the multicast HARQ-ACK, in at least one of the following cases: 1. in a case that the third channel resource corresponding to the multicast dynamic HARQ-ACK and/or the fourth channel resource corresponding to the multicast semi-persistent scheduling HARQ-ACK is not configured for the terminal; 2. in a case that the total number of bits of the unicast HARQ-ACK and the multicast HARQ-ACK is greater than the preset number of bits; and 3. in a case that the number of bits of the unicast HARQ-ACK is less than or equal to the number of bits of the multicast HARQ-ACK.

Specifically, the fifth channel resource may be a PUCCH resource configured by the configuration parameter n1PUCCH-AN (being configured for the configuration of multicast SPS PDSCH). The fifth channel resource, the third channel resource, and the fourth channel resource are configured based on different configuration parameters.

In the foregoing case 1, because the third channel resource corresponding to the multicast dynamic HARQ-ACK and/or the fourth channel resource corresponding to the multicast semi-persistent scheduling HARQ-ACK is not configured for the terminal, the terminal cannot multiplex the unicast HARQ-ACK and the multicast HARQ-ACK onto the third channel resource or the fourth channel resource to feed back to the network-side device. In this case, the terminal may choose a feedback mode of discarding the unicast HARQ-ACK and feeding back the multicast HARQ-ACK to the network-side device by using the fifth channel resource for the multicast HARQ-ACK.

In the foregoing case 2, the preset number of bits may be 2 bits. Because the total number of bits of the unicast HARQ-ACK and the multicast HARQ-ACK is greater than 2 bits, assuming that the second channel resource for the unicast HARQ-ACK can transmit at most 2 bits, in this case, the terminal may choose a feedback mode of discarding the unicast HARQ-ACK and feeding back the multicast HARQ-ACK to the network-side device by using the fifth channel resource for the multicast HARQ-ACK.

In the foregoing case 3, if the number of bits of the unicast HARQ-ACK is less than or equal to the number of bits of the multicast HARQ-ACK, the terminal may choose a feedback mode of discarding the unicast HARQ-ACK with a smaller number of bits and feeding back the multicast HARQ-ACK to the network-side device by using the fifth channel resource for the multicast HARQ-ACK.

In this embodiment, in a case that the network-side device schedules the unicast HARQ-ACK and the multicast HARQ-ACK with the same priority to be fed back in the same time unit, and the first channel resources of the unicast HARQ-ACK is not configured for the terminal, in at least one of the foregoing cases, the terminal may choose a feedback mode of discarding the unicast HARQ-ACK with a smaller number of bits and feeding back the multicast HARQ-ACK to the network-side device by using the fifth channel resource for the multicast HARQ-ACK, thus implementing HARQ-ACK feedback and improving the reliability of communication.

Optionally, the method further includes: in a case that the first channel resource for the unicast HARQ-ACK is configured for the terminal and a transmission code rate for the unicast HARQ-ACK and the multicast HARQ-ACK is greater than a preset code rate, partially discarding, by the terminal, the multicast HARQ-ACK until a transmission code rate for the unicast HARQ-ACK and the remaining multicast HARQ-ACK is less than or equal to the preset code rate, and multiplexing the unicast HARQ-ACK and the remaining multicast HARQ-ACK onto the first channel resource for the unicast HARQ-ACK or the target channel resource for the multicast HARQ-ACK to feed back to the network-side device.

Specifically, the preset code rate is a maximum code rate corresponding to the first channel resource for the unicast HARQ-ACK or 1. in a case that a transmission code rate for the unicast HARQ-ACK and the multicast HARQ-ACK is greater than a preset code rate and transmission cannot be performed by using the first channel resource for the unicast HARQ-ACK, the terminal may choose a feedback mode of partially discarding the multicast HARQ-ACK until a transmission code rate for the unicast HARQ-ACK and the remaining multicast HARQ-ACK is less than or equal to the preset code rate, and multiplexing the unicast HARQ-ACK and the remaining multicast HARQ-ACK onto the first channel resource for the unicast HARQ-ACK or the target channel resource for the multicast HARQ-ACK to feed back to the network-side device.

In this embodiment, in a case that the network-side device schedules the unicast HARQ-ACK and the multicast HARQ-ACK with the same priority to be fed back in the same time unit, and the first channel resource for the unicast HARQ-ACK is configured for the terminal, if the transmission code rate for the unicast HARQ-ACK and the multicast HARQ-ACK is greater than the preset code rate, the terminal may choose a feedback manner of partially discarding the multicast HARQ-ACK until the transmission code rate for the unicast HARQ-ACK and the remaining multicast HARQ-ACK is less than or equal to the preset code rate, and multiplexing the unicast HARQ-ACK and the remaining multicast HARQ-ACK onto the first channel resource for the unicast HARQ-ACK or the target channel resource for the multicast HARQ-ACK to feed back to the network-side device, thus implementing HARQ-ACK feedback and improving the reliability of communication.

Optionally, before the network-side device schedules the unicast HARQ-ACK and the multicast HARQ-ACK with the same priority to be fed back in the same time unit, the first channel resource for the unicast HARQ-ACK is configured for the terminal, that is, a resource list SPS-PUCCH-AN-List corresponding to the unicast HARQ-ACK. In other words, the terminal does not expect that the first channel resource for the unicast HARQ-ACK is not configured.

Optionally, the method further includes: in a case that the first channel resource for the unicast HARQ-ACK is configured for the terminal, transmission code rates for the unicast HARQ-ACK and multicast HARQ-ACK are greater than a preset code rate, and the transmission code rate of the unicast HARQ-ACK is less than or equal to the preset code rate, the terminal discards all the multicast HARQ-ACK and feeds back the unicast HARQ-ACK by using the first channel resource for the unicast HARQ-ACK.

Specifically, the preset code rate is a maximum code rate corresponding to the first channel resource for the unicast HARQ-ACK or 1. If the unicast HARQ-ACK and the multicast HARQ-ACK have a transmission code rate being greater than the preset code rate and cannot be transmitted by using the first channel resource for the unicast HARQ-ACK, the terminal can choose to discard all the multicast HARQ-ACK, and when the transmission code rate of the unicast HARQ-ACK is less than or equal to the preset code rate, feeds back the unicast HARQ-ACK by using the first channel resource for the unicast HARQ-ACK.

In this embodiment, in a case that the network-side device schedules the unicast HARQ-ACK and the multicast HARQ-ACK with the same priority to be fed back in the same time unit, and the first channel resource for the unicast HARQ-ACK is configured for the terminal, if the transmission code rate for the unicast HARQ-ACK and the multicast HARQ-ACK is greater than the preset code rate, the terminal can choose a feedback mode of discarding all the multicast HARQ-ACK and feeding back the unicast HARQ-ACK by using the first channel resource for the unicast HARQ-ACK, thus implementing HARQ-ACK feedback and improving the reliability of communication.

Optionally, before the network-side device schedules the unicast HARQ-ACK and the multicast HARQ-ACK with the same priority to be fed back in the same time unit, the transmission code rate on the first channel resource for the unicast HARQ-ACK is configured for the terminal to be greater than the preset code rate, that is, the terminal does not expect the transmission code rate of the unicast HARQ-ACK and the multicast HARQ-ACK on the first channel resource for the unicast HARQ-ACK to exceed the maximum code rate or exceed 1. That is, the network-side device ensures that the configured first channel resource for the unicast HARQ-ACK is sufficient to transmit feedback of the unicast HARQ-ACK and the multicast HARQ-ACK.

In this embodiment, because the network-side device ensures that the configured first channel resource for the unicast HARQ-ACK is sufficient to transmit feedback of the unicast HARQ-ACK and the multicast HARQ-ACK, in a case that the network-side device schedules the unicast HARQ-ACK and the multicast HARQ-ACK with the same priority to be fed back in the same time unit, and the first channel resource for the unicast HARQ-ACK is configured for the terminal, the terminal may choose a feedback mode of multiplexing the unicast HARQ-ACK and the multicast HARQ-ACK onto the first channel resource for the unicast HARQ-ACK to feed back to the network-side device, thus implementing HARQ-ACK feedback and improving the reliability of communication.

Optionally, the method further includes: in a case that the first channel resource for a unicast HARQ-ACK is configured for the terminal, and transmission code rates for the unicast HARQ-ACK and multicast HARQ-ACK are less than or equal to a preset code rate, multiplexing, by the terminal, the unicast HARQ-ACK and the multicast HARQ-ACK onto the first channel resource for the unicast HARQ-ACK to feed back to the network-side device.

Specifically, the preset code rate is a maximum code rate corresponding to the first channel resource for the unicast HARQ-ACK or 1. If the transmission code rate of the unicast HARQ-ACK and the multicast HARQ-ACK is less than or equal to the preset code rate, because the first channel resource for the unicast HARQ-ACK is configured for the terminal and the second channel resource for the unicast HARQ-ACK is unavailable, the terminal may multiplex the unicast HARQ-ACK and the multicast HARQ-ACK onto the first channel resource for the unicast HARQ-ACK to feed back to the network-side device.

In this embodiment, in a case that the network-side device schedules the unicast HARQ-ACK and the multicast HARQ-ACK with the same priority to be fed back in the same time unit, and the first channel resource for the unicast HARQ-ACK is not configured for the terminal, if the transmission code rate for the unicast HARQ-ACK and the multicast HARQ-ACK is less than or equal to the preset code rate, the terminal may choose a feedback mode of multiplexing the unicast HARQ-ACK and the multicast HARQ-ACK onto the first channel resource for the unicast HARQ-ACK to feed back to the network-side device, thus implementing HARQ-ACK feedback and improving the reliability of communication.

HARQ-ACKs may have high and low priorities, and the priorities are expressed by priority indexes (priority index). Priority index means a high priority and priority index 0 means a low priority. The priority of HARQ-ACK may be indicated by RRC or scheduling DCI. HARQ-ACKs with different priorities correspond to different HARQ-ACK codebooks. It should be noted that the methods in the foregoing embodiments of this application are the same for a high-priority or low-priority processing procedure, and details are not repeated here.

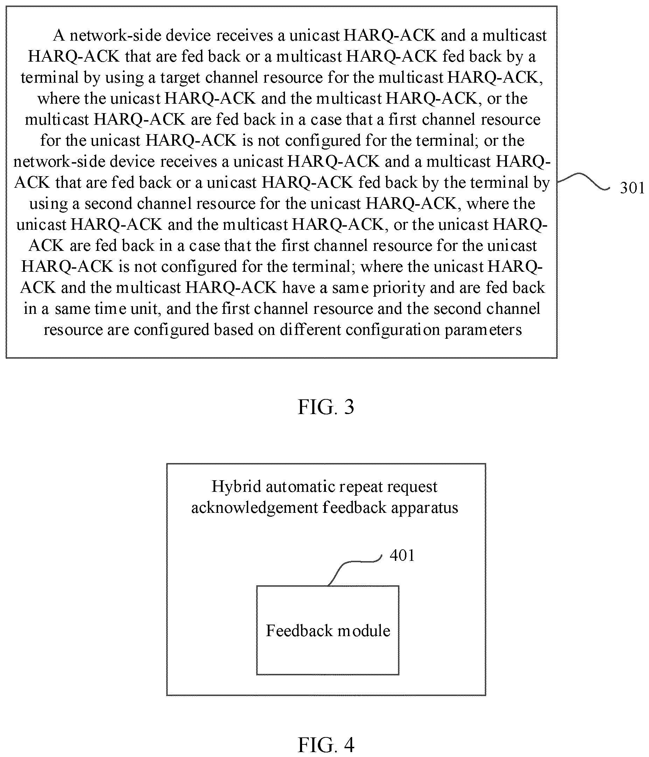

FIG. 3 is a second schematic flowchart of a hybrid automatic repeat request acknowledgement feedback method according to an embodiment of this application. As shown in FIG. 3, the method provided in this embodiment includes the following steps.

Step 301: A network-side device receives a unicast HARQ-ACK and a multicast HARQ-ACK that are fed back or a multicast HARQ-ACK fed back by a terminal by using a target channel resource for the multicast HARQ-ACK, where the unicast HARQ-ACK and the multicast HARQ-ACK, or the multicast HARQ-ACK are fed back in a case that a first channel resource for the unicast HARQ-ACK is not configured for the terminal; or
the network-side device receives a unicast HARQ-ACK and a multicast HARQ-ACK that are fed back or a unicast HARQ-ACK fed back by the terminal by using a second channel resource for the unicast HARQ-ACK, where the unicast HARQ-ACK and the multicast HARQ-ACK, or the unicast HARQ-ACK are fed back in a case that the first channel resource for the unicast HARQ-ACK is not configured for the terminal; where
the unicast HARQ-ACK and the multicast HARQ-ACK have a same priority and are fed back in a same time unit, and the first channel resource and the second channel resource are configured based on different configuration parameters.

Optionally, in a case that the network-side device receives the unicast HARQ-ACK and the multicast HARQ-ACK that are fed back by the terminal by using the second channel resource for the unicast HARQ-ACK, the unicast HARQ-ACK and the multicast HARQ-ACK are fed back by the terminal by being multiplexed onto the second channel resource for the unicast HARQ-ACK in a case that a total number of bits of the unicast HARQ-ACK and the multicast HARQ-ACK is less than or equal to a preset number of bits.

Optionally, the unicast HARQ-ACK and the multicast HARQ-ACK are fed back by the terminal by being multiplexed onto the second channel resource for the unicast HARQ-ACK in a case that a third channel resource corresponding to a multicast dynamic HARQ-ACK and/or a fourth channel resource corresponding to a multicast semi-persistent scheduling HARQ-ACK is not configured for the terminal and the total number of bits of the unicast HARQ-ACK and the multicast HARQ-ACK is less than or equal to a preset number of bits.

Optionally, in a case that the network-side device receives the unicast HARQ-ACK fed back by the terminal by using the second channel resource for the unicast HARQ-ACK, the unicast HARQ-ACK is fed back after the terminal discards the multicast HARQ-ACK in at least one of the following cases:
in a case that the third channel resource corresponding to the multicast dynamic HARQ-ACK and/or the fourth channel resource corresponding to the multicast semi-persistent scheduling HARQ-ACK is not configured for the terminal;
in a case that the total number of bits of the unicast HARQ-ACK and the multicast HARQ-ACK is greater than the preset number of bits; and
in a case that the number of bits of the unicast HARQ-ACK is greater than or equal to the number of bits of the multicast HARQ-ACK.

Optionally, in a case that the network-side device receives the unicast HARQ-ACK and the multicast HARQ-ACK that are fed back by the terminal by using the target channel resource for the multicast HARQ-ACK, the unicast HARQ-ACK and the multicast HARQ-ACK are fed back by the terminal by being multiplexed onto the target channel resource for the multicast HARQ-ACK, and the target channel resource is determined based on a total number of bits of the unicast HARQ-ACK and the multicast HARQ-ACK.

Optionally, the unicast HARQ-ACK and the multicast HARQ-ACK are fed back by the terminal by being multiplexed onto the target channel resource for the multicast HARQ-ACK in a case that the total number of bits of the unicast HARQ-ACK and the multicast HARQ-ACK is greater than a preset number of bits.

Optionally, the target channel resource includes a third channel resource corresponding to a multicast dynamic HARQ-ACK and/or a fourth channel resource corresponding to a multicast semi-persistent scheduling HARQ-ACK; and the unicast HARQ-ACK and the multicast HARQ-ACK are fed back by the terminal by being multiplexed onto the third channel resource corresponding to the multicast dynamic HARQ-ACK, where the multicast HARQ-ACK includes a multicast dynamic HARQ-ACK; or
the unicast HARQ-ACK and the multicast HARQ-ACK are fed back by the terminal by being multiplexed onto the fourth channel resource corresponding to the multicast semi-persistent scheduling HARQ-ACK, where the multicast HARQ-ACK includes only the multicast semi-persistent scheduling HARQ-ACK.

Optionally, the multicast HARQ-ACK includes a HARQ-ACK with a feedback mode being an acknowledgement ACK/non-acknowledgement NACK mode.

Optionally, the target channel resource includes: a fifth channel resource; the fifth channel resource and the third channel resource corresponding to the multicast dynamic HARQ-ACK, or the fifth channel resource and the fourth channel resource corresponding to the multicast semi-persistent scheduling HARQ-ACK are configured based on different configuration parameters; and in a case that the network-side device receives the multicast HARQ-ACK that is fed back by the terminal by using the target channel resource for the multicast HARQ-ACK, the multicast HARQ-ACK is fed back by using the fifth channel resource for the multicast HARQ-ACK after the terminal discards the unicast HARQ-ACK in at least one of the following cases:
in a case that the third channel resource corresponding to the multicast dynamic HARQ-ACK and/or the fourth channel resource corresponding to the multicast semi-persistent scheduling HARQ-ACK is not configured for the terminal;
in a case that the total number of bits of the unicast HARQ-ACK and the multicast HARQ-ACK is greater than the preset number of bits; and
in a case that the number of bits of the unicast HARQ-ACK is less than or equal to the number of bits of the multicast HARQ-ACK.

Optionally, the method further includes: receiving, by the network-side device, the unicast HARQ-ACK and a remaining multicast HARQ-ACK, obtained by partially discarding the multicast HARQ-ACK, that are fed back by the terminal; where the partially discarded multicast HARQ-ACK is discarded in a case that the first channel resource for the unicast HARQ-ACK is configured for the terminal and that a transmission code rate of the unicast HARQ-ACK and the multicast HARQ-ACK is greater than a preset code rate; a transmission code rate of the unicast HARQ-ACK and the remaining multicast HARQ-ACK is less than or equal to the preset code rate; and the unicast HARQ-ACK and the remaining multicast HARQ-ACK are fed back by the terminal by being multiplexed onto the first channel resource for the unicast HARQ-ACK or the target channel resource for the multicast HARQ-ACK.

Optionally, the method further includes: receiving, by the network-side device, the unicast HARQ-ACK fed back by the terminal after all the multicast HARQ-ACK is discarded; where the multicast HARQ-ACK is discarded in a case that the first channel resource for the unicast HARQ-ACK is configured for the terminal, that a transmission code rate of the unicast HARQ-ACK and the multicast HARQ-ACK is greater than a preset code rate, and that a transmission code rate of the unicast HARQ-ACK is less than or equal to the preset code rate; and the unicast HARQ-ACK is fed back by the terminal by using the first channel resource for the unicast HARQ-ACK.

Optionally, the method further includes: receiving, by the network-side device, the unicast HARQ-ACK and the multicast HARQ-ACK that are fed back by the terminal; where the unicast HARQ-ACK and the multicast HARQ-ACK are fed back by being multiplexed onto the first channel resource for the unicast HARQ-ACK in a case that the first channel resource for the unicast HARQ-ACK is configured for the terminal and that a transmission code rate of the unicast HARQ-ACK and the multicast HARQ-ACK is less than or equal to a preset code rate.

FIG. 4 is a first schematic structural diagram of a hybrid automatic repeat request acknowledgement feedback apparatus according to an embodiment of this application. As shown in FIG. 4, the hybrid automatic repeat request acknowledgement feedback apparatus provided in this embodiment includes:
a feedback module 401, configured to: in a case that a first channel resource for a unicast HARQ-ACK is not configured for a terminal, feed back, by using a target channel resource for a multicast HARQ-ACK, the unicast HARQ-ACK and the multicast HARQ-ACK or feed back the multicast HARQ-ACK to a network-side device; or
in a case that the first channel resource for the unicast HARQ-ACK is not configured for the terminal, feed back, by using a second channel resource for the unicast HARQ-ACK, the unicast HARQ-ACK and the multicast HARQ-ACK or feed back the unicast HARQ-ACK to the network-side device; where
the unicast HARQ-ACK and the multicast HARQ-ACK have a same priority and are fed back in a same time unit, and the first channel resource and the second channel resource are configured based on different configuration parameters.

Optionally, the feedback module 401 is specifically configured to multiplex the unicast HARQ-ACK and the multicast HARQ-ACK onto the second channel resource for the unicast HARQ-ACK to feed back to the network-side device, in a case that the total number of bits of the unicast HARQ-ACK and the multicast HARQ-ACK is less than or equal to a preset number of bits.

Optionally, the feedback module 401 is specifically configured to: in a case that a third channel resource corresponding to a multicast dynamic HARQ-ACK and/or a fourth channel resource corresponding to a multicast semi-persistent scheduling HARQ-ACK is configured for the terminal and the total number of bits of the unicast HARQ-ACK and the multicast HARQ-ACK is less than or equal to the preset number of bits, multiplex the unicast HARQ-ACK and the multicast HARQ-ACK onto the second channel resource for the unicast HARQ-ACK to feed back to the network-side device.

Optionally, the feedback module 401 is specifically configured to: discard the multicast HARQ-ACK and feed back the unicast HARQ-ACK to the network-side device by using the second channel resource for the unicast HARQ-ACK, in at least one of the following cases:
in a case that the third channel resource corresponding to the multicast dynamic HARQ-ACK and/or the fourth channel resource corresponding to the multicast semi-persistent scheduling HARQ-ACK is not configured for the terminal;
in a case that the total number of bits of the unicast HARQ-ACK and the multicast HARQ-ACK is greater than the preset number of bits; and
in a case that the number of bits of the unicast HARQ-ACK is greater than or equal to the number of bits of the multicast HARQ-ACK.

Optionally, the feedback module 401 is specifically configured to: multiplex the unicast HARQ-ACK and the multicast HARQ-ACK onto the target channel resource for the multicast HARQ-ACK to feed back to the network-side device, where the target channel resource is determined based on the total number of bits of the unicast HARQ-ACK and the multicast HARQ-ACK.

Optionally, the feedback module 401 is specifically configured to: multiplex the unicast HARQ-ACK and the multicast HARQ-ACK onto the target channel resource for the multicast HARQ-ACK to feed back to the network-side device, in a case that the total number of bits of the unicast HARQ-ACK and the multicast HARQ-ACK is greater than a preset number of bits.

Optionally, the target channel resource includes a third channel resource corresponding to a multicast dynamic HARQ-ACK and/or a fourth channel resource corresponding to a multicast semi-persistent scheduling HARQ-ACK; and the feedback module 401 is specifically configured to:
in a case that the multicast HARQ-ACK includes the multicast dynamic HARQ-ACK, multiplex the unicast HARQ-ACK and the multicast HARQ-ACK onto the third channel resource corresponding to the multicast dynamic HARQ-ACK to feed back to the network-side device; or
in a case that the multicast HARQ-ACK includes only the multicast semi-persistent scheduling HARQ-ACK, multiplex the unicast HARQ-ACK and the multicast HARQ-ACK onto the fourth channel resource corresponding to the multicast semi-persistent scheduling HARQ-ACK to feed back to the network-side device.

Optionally, the multicast HARQ-ACK includes a HARQ-ACK with a feedback mode being an acknowledgement ACK/non-acknowledgement NACK mode.

Optionally, the target channel resource includes: a fifth channel resource; the fifth channel resource and the third channel resource corresponding to the multicast dynamic HARQ-ACK, or the fifth channel resource and the fourth channel resource corresponding to the multicast semi-persistent scheduling HARQ-ACK are configured based on different configuration parameters; and the feedback module 401 is specifically configured to:
discard the unicast HARQ-ACK and feed back the multicast HARQ-ACK to the network-side device by using the fifth channel resource for the multicast HARQ-ACK, in at least one of the following cases:
in a case that the third channel resource corresponding to the multicast dynamic HARQ-ACK and/or the fourth channel resource corresponding to the multicast semi-persistent scheduling HARQ-ACK is not configured for the terminal;
in a case that the total number of bits of the unicast HARQ-ACK and the multicast HARQ-ACK is greater than the preset number of bits; and
in a case that the number of bits of the unicast HARQ-ACK is less than or equal to the number of bits of the multicast HARQ-ACK.

Optionally, the feedback module 401 is further configured to: in a case that the first channel resource for the unicast HARQ-ACK is configured for the terminal and a transmission code rate for the unicast HARQ-ACK and the multicast HARQ-ACK is greater than a preset code rate, partially discard the multicast HARQ-ACK until a transmission code rate for the unicast HARQ-ACK and the remaining multicast HARQ-ACK is less than or equal to the preset code rate, and multiplex the unicast HARQ-ACK and the remaining multicast HARQ-ACK onto the first channel resource for the unicast HARQ-ACK or the target channel resource for the multicast HARQ-ACK to feed back to the network-side device.

Optionally, the feedback module 401 is further configured to: in a case that the first channel resource for the unicast HARQ-ACK is configured for the terminal, a transmission code rate for the unicast HARQ-ACK and the multicast HARQ-ACK is greater than a preset code rate, and the transmission code rate of the unicast HARQ-ACK is less than or equal to the preset code rate, discard all the multicast HARQ-ACK and feed back the unicast HARQ-ACK by using the first channel resource for the unicast HARQ-ACK.

Optionally, the feedback module 401 is further configured to: in a case that the first channel resource for a unicast HARQ-ACK is configured for the terminal, and a transmission code rate for the unicast HARQ-ACK and the multicast HARQ-ACK is less than or equal to a preset code rate, multiplex the unicast HARQ-ACK and the multicast HARQ-ACK onto the first channel resource for the unicast HARQ-ACK to feed back to the network-side device.

The apparatus in this embodiment can be configured to execute the method in any one of the embodiments of the method on the terminal side, and its specific implementation processes and technical effects are similar to those in the embodiments of the method on the terminal side. For details, refer to the detailed descriptions in the embodiments of the method on the terminal-side, which is not repeated herein.

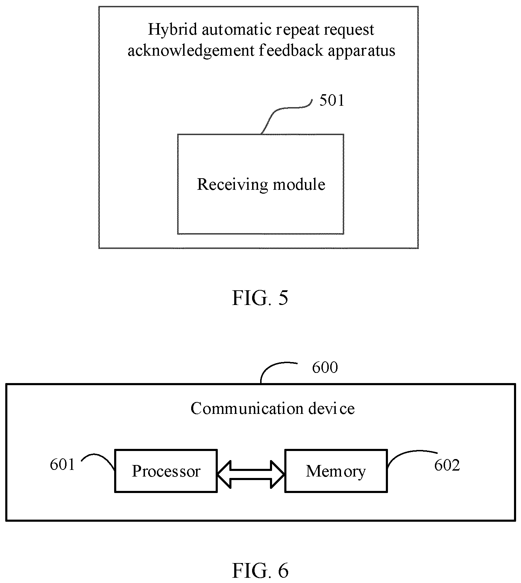

FIG. 5 is a second schematic structural diagram of a hybrid automatic repeat request acknowledgement feedback apparatus according to an embodiment of this application. As shown in FIG. 5, the hybrid automatic repeat request acknowledgement feedback apparatus provided in this embodiment includes:
a receiving module 501, configured to receive a unicast HARQ-ACK and a multicast HARQ-ACK that are fed back or a multicast HARQ-ACK fed back by a terminal by using a target channel resource for the multicast HARQ-ACK, where the unicast HARQ-ACK and the multicast HARQ-ACK, or the multicast HARQ-ACK are fed back in a case that a first channel resource for the unicast HARQ-ACK is not configured for the terminal; or
receive a unicast HARQ-ACK and a multicast HARQ-ACK that are fed back or a unicast HARQ-ACK fed back by the terminal by using a second channel resource for the unicast HARQ-ACK, where the unicast HARQ-ACK and the multicast HARQ-ACK, or the unicast HARQ-ACK are fed back in a case that the first channel resource for the unicast HARQ-ACK is not configured for the terminal; where
the unicast HARQ-ACK and the multicast HARQ-ACK have a same priority and are fed back in a same time unit, and the first channel resource and the second channel resource are configured based on different configuration parameters.

Optionally, in a case that the receiving module 501 is configured to receive the unicast HARQ-ACK and the multicast HARQ-ACK that are fed back by the terminal by using the second channel resource for the unicast HARQ-ACK, the unicast HARQ-ACK and the multicast HARQ-ACK are fed back by the terminal by being multiplexed onto the second channel resource for the unicast HARQ-ACK in a case that a total number of bits of the unicast HARQ-ACK and the multicast HARQ-ACK is less than or equal to a preset number of bits.

Optionally, the unicast HARQ-ACK and the multicast HARQ-ACK are fed back by the terminal by being multiplexed onto the second channel resource for the unicast HARQ-ACK in a case that a third channel resource corresponding to a multicast dynamic HARQ-ACK and/or a fourth channel resource corresponding to a multicast semi-persistent scheduling HARQ-ACK is not configured for the terminal and the total number of bits of the unicast HARQ-ACK and the multicast HARQ-ACK is less than or equal to a preset number of bits.

Optionally, in a case that the receiving module 501 is configured to receive the unicast HARQ-ACK fed back by the terminal by using the second channel resource for the unicast HARQ-ACK, the unicast HARQ-ACK is fed back after the terminal discards the multicast HARQ-ACK in at least one of the following cases:
in a case that the third channel resource corresponding to the multicast dynamic HARQ-ACK and/or the fourth channel resource corresponding to the multicast semi-persistent scheduling HARQ-ACK is not configured for the terminal;
in a case that the total number of bits of the unicast HARQ-ACK and the multicast HARQ-ACK is greater than the preset number of bits; and
in a case that the number of bits of the unicast HARQ-ACK is greater than or equal to the number of bits of the multicast HARQ-ACK.

Optionally, in a case that the receiving module 501 is configured to receive the unicast HARQ-ACK and the multicast HARQ-ACK that are fed back by the terminal by using the target channel resource for the multicast HARQ-ACK, the unicast HARQ-ACK and the multicast HARQ-ACK are fed back by the terminal by being multiplexed onto the target channel resource for the multicast HARQ-ACK, and the target channel resource is determined based on a total number of bits of the unicast HARQ-ACK and the multicast HARQ-ACK.

Optionally, the unicast HARQ-ACK and the multicast HARQ-ACK are fed back by the terminal by being multiplexed onto the target channel resource for the multicast HARQ-ACK in a case that the total number of bits of the unicast HARQ-ACK and the multicast HARQ-ACK is greater than a preset number of bits.

Optionally, the target channel resource includes a third channel resource corresponding to a multicast dynamic HARQ-ACK and/or a fourth channel resource corresponding to a multicast semi-persistent scheduling HARQ-ACK; and the unicast HARQ-ACK and the multicast HARQ-ACK are fed back by the terminal by being multiplexed onto the third channel resource corresponding to the multicast dynamic HARQ-ACK, where the multicast HARQ-ACK includes a multicast dynamic HARQ-ACK; or
the unicast HARQ-ACK and the multicast HARQ-ACK are fed back by the terminal by being multiplexed onto the fourth channel resource corresponding to the multicast semi-persistent scheduling HARQ-ACK, where the multicast HARQ-ACK includes only the multicast semi-persistent scheduling HARQ-ACK.

Optionally, the multicast HARQ-ACK includes a HARQ-ACK with a feedback mode being an acknowledgement ACK/non-acknowledgement NACK mode.

Optionally, the target channel resource includes: a fifth channel resource; the fifth channel resource and the third channel resource corresponding to the multicast dynamic HARQ-ACK, or the fifth channel resource and the fourth channel resource corresponding to the multicast semi-persistent scheduling HARQ-ACK are configured based on different configuration parameters; and in a case that the receiving module 501 is configured to receive the multicast HARQ-ACK that is fed back by the terminal by using the target channel resource for the multicast HARQ-ACK, the multicast HARQ-ACK is fed back by using the fifth channel resource for the multicast HARQ-ACK after the terminal discards the unicast HARQ-ACK in at least one of the following cases:
in a case that the third channel resource corresponding to the multicast dynamic HARQ-ACK and/or the fourth channel resource corresponding to the multicast semi-persistent scheduling HARQ-ACK is not configured for the terminal;
in a case that the total number of bits of the unicast HARQ-ACK and the multicast HARQ-ACK is greater than the preset number of bits; and
in a case that the number of bits of the unicast HARQ-ACK is less than or equal to the number of bits of the multicast HARQ-ACK.

Optionally, the receiving module 501 is further configured to: receive the unicast HARQ-ACK and a remaining multicast HARQ-ACK, obtained by partially discarding the multicast HARQ-ACK, that are fed back by the terminal; where the partially discarded multicast HARQ-ACK is discarded in a case that the first channel resource for the unicast HARQ-ACK is configured for the terminal and that a transmission code rate of the unicast HARQ-ACK and the multicast HARQ-ACK is greater than a preset code rate; a transmission code rate of the unicast HARQ-ACK and the remaining multicast HARQ-ACK is less than or equal to the preset code rate; and the unicast HARQ-ACK and the remaining multicast HARQ-ACK are fed back by the terminal by being multiplexed onto the first channel resource for the unicast HARQ-ACK or the target channel resource for the multicast HARQ-ACK.

Optionally, the receiving module 501 is further configured to: receive the unicast HARQ-ACK fed back by the terminal after all the multicast HARQ-ACK is discarded; where the multicast HARQ-ACK is discarded in a case that the first channel resource for the unicast HARQ-ACK is configured for the terminal, that a transmission code rate of the unicast HARQ-ACK and the multicast HARQ-ACK is greater than a preset code rate, and that a transmission code rate of the unicast HARQ-ACK is less than or equal to the preset code rate; and the unicast HARQ-ACK is fed back by the terminal by using the first channel resource for the unicast HARQ-ACK.

Optionally, the receiving module 501 is further configured to: receive the unicast HARQ-ACK and the multicast HARQ-ACK that are fed back by the terminal; where the unicast HARQ-ACK and the multicast HARQ-ACK are fed back by being multiplexed onto the first channel resource for the unicast HARQ-ACK in a case that the first channel resource for the unicast HARQ-ACK is configured for the terminal and that a transmission code rate of the unicast HARQ-ACK and the multicast HARQ-ACK is less than or equal to a preset code rate.

The apparatus in this embodiment can be configured to execute the method in any one of the embodiments of the method on the network-side device side, and its specific implementation processes and technical effects are similar to those in the embodiments of the method on the network-side device side. For details, refer to the detailed descriptions in the embodiments of the method on the network-side device side, which is not repeated herein.

The hybrid automatic repeat request acknowledgement feedback apparatus in this embodiment of this application may be an electronic device, or may be a component in the electronic device, such as an integrated circuit or a chip. The electronic device may be a terminal or other devices than the terminal. For example, the terminal may include but is not limited to the types of the terminal 11 listed above, and other devices may be a server, a network attached storage (Network Attached Storage, NAS), a personal computer (personal computer, PC), a television (television, TV), a teller machine, a self-service machine, or the like, which is not specifically limited in this embodiment of this application.

The hybrid automatic repeat request acknowledgement feedback apparatus in this embodiment of this application may be an apparatus with an operating system. The operating system may be an Android (Android) operating system, an iOS operating system, or other possible operating systems, and is not specifically limited in the embodiments of this application.

The hybrid automatic repeat request acknowledgement feedback apparatus provided in this embodiment of this application can implement the processes implemented in the method embodiment in FIG. 1 and FIG. 2, with the same technical effects achieved. To avoid repetition, details are not described herein again.

Optionally, as shown in FIG. 6, an embodiment of this application further provides a communication device 600, including a processor 601, a memory 602, and a program or instructions stored in the memory 602 and capable of running on the processor 601. For example, when the communication device 600 is a terminal and when the program or the instructions are executed by the processor 601, the steps of the foregoing embodiments of the hybrid automatic repeat request acknowledgement feedback method are implemented, with the same technical effects achieved. When the communications device 600 is a network-side device and when the program or the instructions are executed by the processor 601, the processes of the foregoing embodiments of the hybrid automatic repeat request acknowledgement feedback method are implemented, with the same technical effects achieved. To avoid repetition, details are not described herein again.

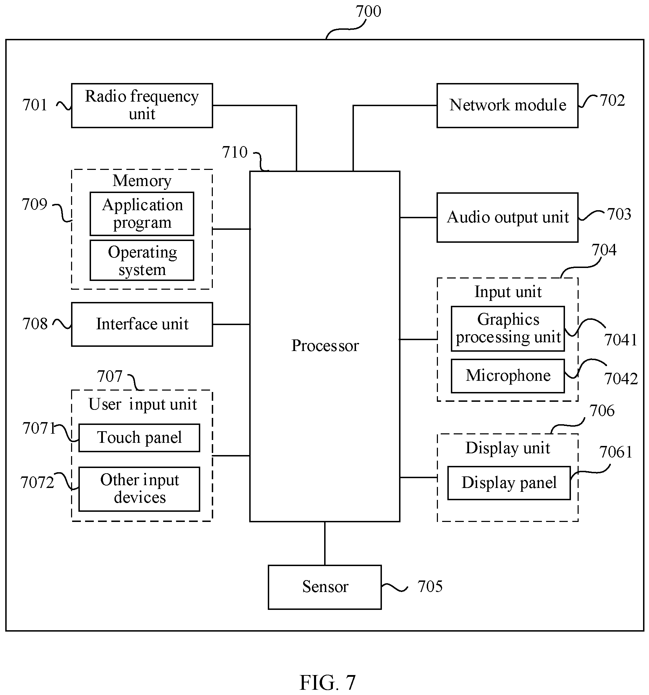

An embodiment of this application further provides a terminal, including a processor and a memory, and a program or instructions capable of running on the processor are stored in the memory. When the program or the instructions are executed by the processor, the steps of the foregoing method embodiments on the terminal side are implemented. The terminal embodiments correspond to the foregoing terminal-side method embodiments, and the implementation processes and implementations of the foregoing method embodiments can be applied to the terminal embodiments, with the same technical effects achieved. Specifically, FIG. 7 is a schematic diagram of a hardware structure of a terminal according to an embodiment of this application.

The terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network-side device, and then sends the downlink data to the processor 710 for processing. In addition, the radio frequency unit 701 may send uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may include a first storage area for storing a program or instructions and a second storage area for storing data. The first storage area may store an operating system, an application program or instruction required by at least one function (for example, a sound playback function or an image playback function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 in the embodiments of this application includes but is not limited to these and any other suitable types of memories.

The processor 710 may include one or more processing units. Optionally, an application processor and a modem processor may be integrated in the processor 710. The application processor primarily processes operations involving an operating system, user interfaces, application programs, and the like. The modem processor primarily processes radio communication signals, for example, being a baseband processor. It can be understood that the modem processor may alternatively be not integrated in the processor 710.

The processor 710 is configured to: in a case that a first channel resource for a unicast HARQ-ACK is not configured for a terminal, feed back, by using a target channel resource for a multicast HARQ-ACK, the unicast HARQ-ACK and the multicast HARQ-ACK or feed back the multicast HARQ-ACK to a network-side device; or
in a case that the first channel resource for the unicast HARQ-ACK is not configured for the terminal, feed back, by using a second channel resource for the unicast HARQ-ACK, the unicast HARQ-ACK and the multicast HARQ-ACK or feed back the unicast HARQ-ACK to the network-side device; where
the unicast HARQ-ACK and the multicast HARQ-ACK have a same priority and are fed back in a same time unit, and the first channel resource and the second channel resource are configured based on different configuration parameters.

In the foregoing implementation, in a case that the network-side device schedules unicast HARQ-ACK and multicast HARQ-ACK with a same priority to be fed back in a same time unit, and the first channel resource for the unicast HARQ-ACK is not configured for the terminal, a plurality of different feedback modes can be selected to feed back the unicast HARQ-ACK and/or the multicast HARQ-ACK, thus implementing HARQ-ACK feedback, improving the reliability of communication, and featuring greater flexibility.

Optionally, the processor 710 is specifically configured to:

Multiplex the unicast HARQ-ACK and the multicast HARQ-ACK onto the second channel resource for the unicast HARQ-ACK to feed back to the network-side device, in a case that the total number of bits of the unicast HARQ-ACK and the multicast HARQ-ACK is less than or equal to a preset number of bits.

In the foregoing implementation, in a case that the network-side device schedules the unicast HARQ-ACK and the multicast HARQ-ACK with the same priority to be fed back in the same time unit, and the first channel resource for the unicast HARQ-ACK is not configured for the terminal, if the total number of bits of the unicast HARQ-ACK and the multicast HARQ-ACK is less than or equal to the preset number of bits, the terminal may use a feedback mode of multiplexing the unicast HARQ-ACK and the multicast HARQ-ACK onto the second channel resource for the unicast HARQ-ACK to feed back to the network-side device, thus implementing HARQ-ACK feedback and improving the reliability of communication.

Optionally, the processor 710 is specifically configured to:
in a case that a third channel resource corresponding to a multicast dynamic HARQ-ACK and/or a fourth channel resource corresponding to a multicast semi-persistent scheduling HARQ-ACK is configured for the terminal and the total number of bits of the unicast HARQ-ACK and the multicast HARQ-ACK is less than or equal to the preset number of bits, multiplex the unicast HARQ-ACK and the multicast HARQ-ACK onto the second channel resource for the unicast HARQ-ACK to feed back to the network-side device.

In the foregoing implementation, in a case that the network-side device schedules the unicast HARQ-ACK and the multicast HARQ-ACK with the same priority to be fed back in the same time unit, and the first channel resource for the unicast HARQ-ACK and the third channel resource corresponding to the multicast dynamic HARQ-ACK and/or the fourth channel resource corresponding to the multicast semi-persistent scheduling HARQ-ACK are not configured for the terminal, if the total number of bits of the unicast HARQ-ACK and the multicast HARQ-ACK is less than or equal to the preset number of bits, the terminal may use a feedback mode of multiplexing the unicast HARQ-ACK and the multicast HARQ-ACK onto the second channel resource for the unicast HARQ-ACK to feed back to the network-side device, thus implementing HARQ-ACK feedback and improving the reliability of communication.

Optionally, the processor 710 is specifically configured to: discard the multicast HARQ-ACK and feed back the unicast HARQ-ACK to the network-side device by using the second channel resource for the unicast HARQ-ACK, in at least one of the following cases:
in a case that the third channel resource corresponding to the multicast dynamic HARQ-ACK and/or the fourth channel resource corresponding to the multicast semi-persistent scheduling HARQ-ACK is not configured for the terminal;
in a case that the total number of bits of the unicast HARQ-ACK and the multicast HARQ-ACK is greater than the preset number of bits; and
in a case that the number of bits of the unicast HARQ-ACK is greater than or equal to the number of bits of the multicast HARQ-ACK.

In the foregoing implementation, in a case that the network-side device schedules the unicast HARQ-ACK and the multicast HARQ-ACK with the same priority to be fed back in the same time unit, and the first channel resource for the unicast HARQ-ACK is not configured for the terminal, in at least one of the foregoing cases, the terminal may choose a feedback manner of discarding the multicast HARQ-ACK and feeding back the unicast HARQ-ACK to the network-side device by using the second channel resource for the unicast HARQ-ACK, thus implementing HARQ-ACK feedback.

Optionally, the processor 710 is specifically configured to:
multiplex the unicast HARQ-ACK and the multicast HARQ-ACK onto the target channel resource for the multicast HARQ-ACK to feed back to the network-side device, where the target channel resource is determined based on the total number of bits of the unicast HARQ-ACK and the multicast HARQ-ACK.

In the foregoing implementation, in a case that the network-side device schedules the unicast HARQ-ACK and the multicast HARQ-ACK with the same priority to be fed back in the same time unit, and the first channel resource for the unicast HARQ-ACK is not configured for the terminal, in at least one of the foregoing cases, the terminal may alternatively use a feedback mode of multiplexing the unicast HARQ-ACK and the multicast HARQ-ACK to the target channel resource for the multicast HARQ-ACK to feed back to the network-side device, thus implementing HARQ-ACK feedback and improving the reliability of communication.

Optionally, the processor 710 is specifically configured to:
multiplex the unicast HARQ-ACK and the multicast HARQ-ACK onto the target channel resource for the multicast HARQ-ACK to feed back to the network-side device, in a case that the total number of bits of the unicast HARQ-ACK and the multicast HARQ-ACK is greater than a preset number of bits.

In the foregoing implementation, in a case that the network-side device schedules the unicast HARQ-ACK and the multicast HARQ-ACK with the same priority to be fed back in the same time unit, and the first channel resource for the unicast HARQ-ACK is not configured for the terminal, if the total number of bits of the unicast HARQ-ACK and the multicast HARQ-ACK is greater than the preset number of bits, the terminal may use a feedback mode of multiplexing the unicast HARQ-ACK and the multicast HARQ-ACK onto the target channel resource for the multicast HARQ-ACK to feed back to the network-side device, thus implementing HARQ-ACK feedback and improving the reliability of communication.

Optionally, the target channel resource includes a third channel resource corresponding to a multicast dynamic HARQ-ACK and/or a fourth channel resource corresponding to a multicast semi-persistent scheduling HARQ-ACK; and the processor 710 is specifically configured to:
in a case that the multicast HARQ-ACK includes the multicast dynamic HARQ-ACK, multiplex the unicast HARQ-ACK and the multicast HARQ-ACK onto the third channel resource corresponding to the multicast dynamic HARQ-ACK to feed back to the network-side device; or
in a case that the multicast HARQ-ACK includes only the multicast semi-persistent scheduling HARQ-ACK, multiplex the unicast HARQ-ACK and the multicast HARQ-ACK onto the fourth channel resource corresponding to the multicast semi-persistent scheduling HARQ-ACK to feed back to the network-side device.

In the foregoing embodiment, when the network-side device schedules the unicast HARQ-ACK and the multicast HARQ-ACK with the same priority to be fed back in the same time unit, and the first channel resource for the unicast HARQ-ACK is not configured for the terminal, if the multicast HARQ-ACK includes the multicast dynamic HARQ-ACK, the terminal may use a feedback mode of multiplexing the unicast HARQ-ACK and the multicast HARQ-ACK onto the third channel resource to feed back to the network-side device; and if the multicast HARQ-ACK includes only the multicast semi-persistent scheduling HARQ-ACK, the terminal may use a feedback mode of multiplexing the unicast HARQ-ACK and the multicast HARQ-ACK to the fourth channel resource to feed back to the network-side device, thus implementing HARQ-ACK feedback and improving the reliability of communication.

Optionally, the multicast HARQ-ACK includes a HARQ-ACK with a feedback mode being an acknowledgement ACK/non-acknowledgement NACK mode.

In the foregoing implementation, because the feedback mode is the ACK/NACK mode, a configured PUCCH resource may be terminal-specific.

Optionally, the target channel resource includes: a fifth channel resource; the fifth channel resource and the third channel resource corresponding to the multicast dynamic HARQ-ACK, or the fifth channel resource and the fourth channel resource corresponding to the multicast semi-persistent scheduling HARQ-ACK are configured based on different configuration parameters; and the processor 710 is specifically configured to:
discarding, by the terminal, the unicast HARQ-ACK and feeding back the multicast HARQ-ACK to the network-side device by using the fifth channel resource for the multicast HARQ-ACK, in at least one of the following cases:
   in a case that the third channel resource corresponding to the multicast dynamic HARQ-ACK and/or the fourth channel resource corresponding to the multicast semi-persistent scheduling HARQ-ACK is not configured for the terminal;
   in a case that the total number of bits of the unicast HARQ-ACK and the multicast HARQ-ACK is greater than the preset number of bits; and
   in a case that the number of bits of the unicast HARQ-ACK is less than or equal to the number of bits of the multicast HARQ-ACK.

In the foregoing embodiment, in a case that the network-side device schedules the unicast HARQ-ACK and the multicast HARQ-ACK with the same priority to be fed back in the same time unit, and the first channel resource for the unicast HARQ-ACK is not configured for the terminal, in at least one of the foregoing cases, the terminal may choose a feedback manner of discarding the unicast HARQ-ACK and feeding back the multicast HARQ-ACK to the network-side device by using the fifth channel resource for the multicast HARQ-ACK, thus implementing HARQ-ACK feedback.

Optionally, the processor 710 is further configured to:
in a case that the first channel resource for the unicast HARQ-ACK is configured for the terminal and a transmission code rate for the unicast HARQ-ACK and the multicast HARQ-ACK is greater than a preset code rate, partially discard the multicast HARQ-ACK until a transmission code rate for the unicast HARQ-ACK and the remaining multicast HARQ-ACK is less than or equal to the preset code rate, and multiplex the unicast HARQ-ACK and the remaining multicast HARQ-ACK onto the first channel resource for the unicast HARQ-ACK or the target channel resource for the multicast HARQ-ACK to feed back to the network-side device.

In the foregoing implementation, in a case that the network-side device schedules the unicast HARQ-ACK and the multicast HARQ-ACK with the same priority to be fed back in the same time unit, and the first channel resource for the unicast HARQ-ACK is configured for the terminal, if the transmission code rate for the unicast HARQ-ACK and the multicast HARQ-ACK is greater than the preset code rate, the terminal may choose a feedback manner of partially discarding the multicast HARQ-ACK until the transmission code rate for the unicast HARQ-ACK and the remaining multicast HARQ-ACK is less than or equal to the preset code rate, and multiplexes the unicast HARQ-ACK and the remaining multicast HARQ-ACK onto the first channel resource for the unicast HARQ-ACK or the target channel resource for the multicast HARQ-ACK to feed back to the network-side device, thus implementing HARQ-ACK feedback and improving the reliability of communication.

Optionally, the processor 710 is further configured to:
in a case that the first channel resource for the unicast HARQ-ACK is configured for the terminal, a transmission code rate for the unicast HARQ-ACK and the multicast HARQ-ACK is greater than a preset code rate, and the transmission code rate of the unicast HARQ-ACK is less than or equal to the preset code rate, discard all the multicast HARQ-ACK and feed back the unicast HARQ-ACK by using the first channel resource for the unicast HARQ-ACK.

In the foregoing implementation, in a case that the network-side device schedules the unicast HARQ-ACK and the multicast HARQ-ACK with the same priority to be fed back in the same time unit, and the first channel resource for the unicast HARQ-ACK is configured for the terminal, if the transmission code rate for the unicast HARQ-ACK and the multicast HARQ-ACK is greater than the preset code rate, the terminal can choose a feedback mode of discarding all the multicast HARQ-ACK and feeding back the unicast HARQ-ACK by using the first channel resource for the unicast HARQ-ACK, thus implementing HARQ-ACK feedback and improving the reliability of communication.

Optionally, the processor 710 is further configured to:
in a case that the first channel resource for a unicast HARQ-ACK is configured for the terminal, and a transmission code rate for the unicast HARQ-ACK and the multicast HARQ-ACK is less than or equal to a preset code rate, multiplex the unicast HARQ-ACK and the multicast HARQ-ACK onto the first channel resource for the unicast HARQ-ACK to feed back to the network-side device.

In the foregoing embodiment, in a case that the network-side device schedules the unicast HARQ-ACK and the multicast HARQ-ACK with the same priority to be fed back in the same time unit, and the first channel resource for the unicast HARQ-ACK is configured for the terminal, if the transmission code rate for the unicast HARQ-ACK and the multicast HARQ-ACK is less than or equal to the preset code rate, the terminal may choose a feedback mode of multiplexing the unicast HARQ-ACK and the multicast HARQ-ACK onto the first channel resource for the unicast HARQ-ACK to feed back to the network-side device, thus implementing HARQ-ACK feedback and improving the reliability of communication.

An embodiment of this application further provides a network-side device, including a processor and a memory, and a program or instructions capable of running on the processor are stored in the memory. When the program or the instructions are executed by the processor, the steps of the foregoing method embodiments on the network-side device side are implemented. The network-side device embodiments correspond to the foregoing network-side device method embodiments, and the implementation processes and implementations of the foregoing method embodiments can be applied to the network-side device embodiments, with the same technical effects achieved.

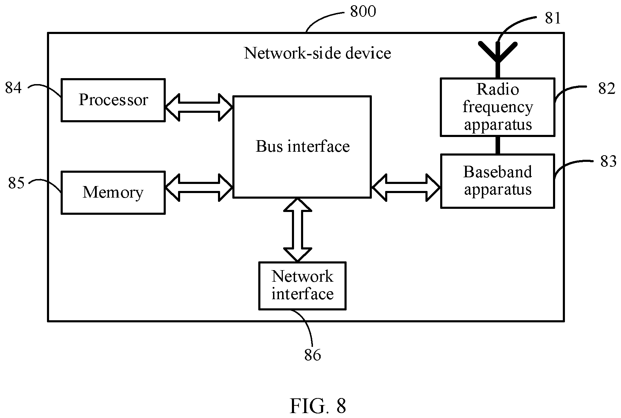

Specifically, an embodiment of this application further provides a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The method executed by the network-side device in the foregoing embodiments can be implemented in the baseband apparatus 83, and the baseband apparatus 83 includes a baseband processor.

The baseband apparatus 83 may include, for example, at least one baseband board, where a plurality of chips are disposed on the baseband board. As shown in FIG. 8, one of the chips is, for example, a baseband processor, and is connected to the memory 85 through the bus interface, to invoke a program in the memory 85 to perform the operations of the network device shown in the foregoing method embodiments.

The network-side device may further include a network interface 86, where the interface is, for example, a common public radio interface (common public radio interface, CPRI).

Specifically, the network-side device 800 in this embodiment of the present invention further includes: instructions or a program stored in the memory 85 and capable of running on the processor 84. The processor 84 invokes the instructions or program in the memory 85 to execute the method executed by the modules shown in FIG. 5, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiment of the hybrid automatic repeat request acknowledgement feedback method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communications interface. The communications interface is coupled to the processor, and the processor is configured to run a program or instructions to implement the processes of the foregoing hybrid automatic repeat request acknowledgement feedback method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing hybrid automatic repeat request acknowledgement feedback method embodiments, with the same technical effects achieved. To avoid repetition, details are not repeated herein.

An embodiment of this application further provides a communication system, including a terminal and a network-side device, where the terminal can be configured to execute the steps of the hybrid automatic repeat request acknowledgement feedback method, and the network-side device can be configured to execute the steps of the hybrid automatic repeat request acknowledgement feedback method.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A hybrid automatic repeat request acknowledgement HARQ-ACK feedback method, comprising:
in a case that a first channel resource for a unicast HARQ-ACK is not configured for a terminal, feeding back, by the terminal by using a target channel resource for a multicast HARQ-ACK, the unicast HARQ-ACK and the multicast HARQ-ACK or feeding back the multicast HARQ-ACK to a network-side device; or
in a case that the first channel resource for the unicast HARQ-ACK is not configured for the terminal, feeding back, by the terminal by using a second channel resource for the unicast HARQ-ACK, the unicast HARQ-ACK and the multicast HARQ-ACK or feeding back the unicast HARQ-ACK to the network-side device; wherein
the unicast HARQ-ACK and the multicast HARQ-ACK have a same priority and are fed back in a same time unit, and the first channel resource and the second channel resource are configured based on different configuration parameters.

2. The HARQ-ACK feedback method according to claim 1, wherein the feeding back, by the terminal by using a second channel resource for the unicast HARQ-ACK, the unicast HARQ-ACK and the multicast HARQ-ACK to the network-side device comprises:
multiplexing, by the terminal, the unicast HARQ-ACK and the multicast HARQ-ACK onto the second channel resource for the unicast HARQ-ACK to feed back to the network-side device, in a case that the total number of bits of the unicast HARQ-ACK and the multicast HARQ-ACK is less than or equal to a preset number of bits.

3. The HARQ-ACK feedback method according to claim 2, wherein the multiplexing, by the terminal, the unicast HARQ-ACK and the multicast HARQ-ACK onto the second channel resource for the unicast HARQ-ACK to feed back to the network-side device, in a case that the total number of bits of the unicast HARQ-ACK and the multicast HARQ-ACK is less than or equal to a preset number of bits comprises:
in a case that a third channel resource corresponding to a multicast dynamic HARQ-ACK and/or a fourth channel resource corresponding to a multicast semi-persistent scheduling HARQ-ACK is configured for the terminal and the total number of bits of the unicast HARQ-ACK and the multicast HARQ-ACK is less than or equal to the preset number of bits, multiplexing, by the terminal, the unicast HARQ-ACK and the multicast HARQ-ACK onto the second channel resource for the unicast HARQ-ACK to feed back to the network-side device.

4. The HARQ-ACK feedback method according to any one of claims 1 to 3, wherein the feeding back, by the terminal by using a second channel resource for the unicast HARQ-ACK, the unicast HARQ-ACK to the network-side device comprises:
discarding, by the terminal, the multicast HARQ-ACK and feeding back the unicast HARQ-ACK to the network-side device by using the second channel resource for the unicast HARQ-ACK, in at least one of the following cases:
in a case that a third channel resource corresponding to a multicast dynamic HARQ-ACK and/or a fourth channel resource corresponding to a multicast semi-persistent scheduling HARQ-ACK is not configured for the terminal;
in a case that the total number of bits of the unicast HARQ-ACK and the multicast HARQ-ACK is greater than a preset number of bits; and
in a case that the number of bits of the unicast HARQ-ACK is greater than or equal to the number of bits of the multicast HARQ-ACK.

5. The HARQ-ACK feedback method according to claim 1, wherein the feeding back, by the terminal by using a target channel resource for a multicast HARQ-ACK, the unicast HARQ-ACK and the multicast HARQ-ACK to a network-side device comprises:
multiplexing, by the terminal, the unicast HARQ-ACK and the multicast HARQ-ACK onto the target channel resource for the multicast HARQ-ACK to feed back to the network-side device, wherein the target channel resource is determined based on the total number of bits of the unicast HARQ-ACK and the multicast HARQ-ACK.

6. The HARQ-ACK feedback method according to claim 5, wherein the multiplexing, by the terminal, the unicast HARQ-ACK and the multicast HARQ-ACK onto the target channel resource for the multicast HARQ-ACK to feed back to the network-side device comprises:
multiplexing, by the terminal, the unicast HARQ-ACK and the multicast HARQ-ACK onto the target channel resource for the multicast HARQ-ACK to feed back to the network-side device, in a case that the total number of bits of the unicast HARQ-ACK and the multicast HARQ-ACK is greater than a preset number of bits.

7. The HARQ-ACK feedback method according to claim 5 or 6, wherein the target channel resource comprises a third channel resource corresponding to a multicast dynamic HARQ-ACK and/or a fourth channel resource corresponding to a multicast semi-persistent scheduling HARQ-ACK; and the multiplexing, by the terminal, the unicast HARQ-ACK and the multicast HARQ-ACK onto the target channel resource for the multicast HARQ-ACK to feed back to the network-side device comprises:
in a case that the multicast HARQ-ACK comprises the multicast dynamic HARQ-ACK, multiplexing, by the terminal, the unicast HARQ-ACK and the multicast HARQ-ACK onto the third channel resource corresponding to the multicast dynamic HARQ-ACK to feed back to the network-side device; or
in a case that the multicast HARQ-ACK comprises only the multicast semi-persistent scheduling HARQ-ACK, multiplexing, by the terminal, the unicast HARQ-ACK and the multicast HARQ-ACK onto the fourth channel resource corresponding to the multicast semi-persistent scheduling HARQ-ACK to feed back to the network-side device.

8. The HARQ-ACK feedback method according to claim 7, wherein the multicast HARQ-ACK comprises a HARQ-ACK with a feedback mode being an acknowledgement ACK or non-acknowledgement NACK mode.

9. The HARQ-ACK feedback method according to any one of claims 1 to 8, wherein the target channel resource comprises: a fifth channel resource; the fifth channel resource and a third channel resource corresponding to a multicast dynamic HARQ-ACK, or the fifth channel resource and a fourth channel resource corresponding to a multicast semi-persistent scheduling HARQ-ACK are configured based on different configuration parameters; and the feeding back, by the terminal by using a target channel resource for a multicast HARQ-ACK, the multicast HARQ-ACK to a network-side device comprises:
discarding, by the terminal, the unicast HARQ-ACK and feeding back the multicast HARQ-ACK to the network-side device by using the fifth channel resource for the multicast HARQ-ACK, in at least one of the following cases:
in a case that the third channel resource corresponding to the multicast dynamic HARQ-ACK and/or the fourth channel resource corresponding to the multicast semi-persistent scheduling HARQ-ACK is not configured for the terminal;
in a case that the total number of bits of the unicast HARQ-ACK and the multicast HARQ-ACK is greater than a preset number of bits; and
in a case that the number of bits of the unicast HARQ-ACK is less than or equal to the number of bits of the multicast HARQ-ACK.

10. The HARQ-ACK feedback method according to any one of claims 1 to 9, wherein the method further comprises:
in a case that the first channel resource for the unicast HARQ-ACK is configured for the terminal and a transmission code rate for the unicast HARQ-ACK and the multicast HARQ-ACK is greater than a preset code rate, partially discarding, by the terminal, the multicast HARQ-ACK until a transmission code rate for the unicast HARQ-ACK and a remaining multicast HARQ-ACK is less than or equal to the preset code rate, and multiplexing the unicast HARQ-ACK and the remaining multicast HARQ-ACK onto the first channel resource for the unicast HARQ-ACK or the target channel resource for the multicast HARQ-ACK to feed back to the network-side device.

11. The HARQ-ACK feedback method according to any one of claims 1 to 9, wherein the method further comprises:
in a case that the first channel resource for the unicast HARQ-ACK is configured for the terminal, a transmission code rate for the unicast HARQ-ACK and the multicast HARQ-ACK is greater than a preset code rate, and a transmission code rate of the unicast HARQ-ACK is less than or equal to the preset code rate, discarding, by the terminal, all the multicast HARQ-ACK and feeding back the unicast HARQ-ACK by using the first channel resource for the unicast HARQ-ACK.

12. The HARQ-ACK feedback method according to any one of claims 1 to 9, wherein the method further comprises:
in a case that the first channel resource for the unicast HARQ-ACK is configured for the terminal, and a transmission code rate for the unicast HARQ-ACK and the multicast HARQ-ACK is less than or equal to a preset code rate, multiplexing, by the terminal, the unicast HARQ-ACK and the multicast HARQ-ACK onto the first channel resource for the unicast HARQ-ACK to feed back to the network-side device.

13. A hybrid automatic repeat request acknowledgement HARQ-ACK feedback method, comprising:
receiving, by a network-side device, a unicast HARQ-ACK and a multicast HARQ-ACK that are fed back or a multicast HARQ-ACK fed back by a terminal by using a target channel resource for the multicast HARQ-ACK, wherein the unicast HARQ-ACK and the multicast HARQ-ACK, or the multicast HARQ-ACK are fed back in a case that a first channel resource for the unicast HARQ-ACK is not configured for the terminal; or
receiving, by the network-side device, a unicast HARQ-ACK and a multicast HARQ-ACK that are fed back or a unicast HARQ-ACK fed back by the terminal by using a second channel resource for the unicast HARQ-ACK, wherein the unicast HARQ-ACK and the multicast HARQ-ACK, or the unicast HARQ-ACK are fed back in a case that the first channel resource for the unicast HARQ-ACK is not configured for the terminal; wherein
the unicast HARQ-ACK and the multicast HARQ-ACK have a same priority and are fed back in a same time unit, and the first channel resource and the second channel resource are configured based on different configuration parameters.

14. The HARQ-ACK feedback method according to claim 13, wherein in a case that the network-side device receives the unicast HARQ-ACK and the multicast HARQ-ACK that are fed back by the terminal by using the second channel resource for the unicast HARQ-ACK, the unicast HARQ-ACK and the multicast HARQ-ACK are fed back by the terminal by being multiplexed onto the second channel resource for the unicast HARQ-ACK in a case that a total number of bits of the unicast HARQ-ACK and the multicast HARQ-ACK is less than or equal to a preset number of bits.

15. The HARQ-ACK feedback method according to claim 14, wherein the unicast HARQ-ACK and the multicast HARQ-ACK are fed back by the terminal by being multiplexed onto the second channel resource for the unicast HARQ-ACK in a case that a third channel resource corresponding to a multicast dynamic HARQ-ACK and/or a fourth channel resource corresponding to a multicast semi-persistent scheduling HARQ-ACK is not configured for the terminal and the total number of bits of the unicast HARQ-ACK and the multicast HARQ-ACK is less than or equal to a preset number of bits.

16. The HARQ-ACK feedback method according to any one of claims 13 to 15, wherein in a case that the network-side device receives the unicast HARQ-ACK fed back by the terminal by using the second channel resource for the unicast HARQ-ACK, the unicast HARQ-ACK is fed back after the terminal discards the multicast HARQ-ACK in at least one of the following cases:
in a case that a third channel resource corresponding to a multicast dynamic HARQ-ACK and/or a fourth channel resource corresponding to a multicast semi-persistent scheduling HARQ-ACK is not configured for the terminal;
in a case that the total number of bits of the unicast HARQ-ACK and the multicast HARQ-ACK is greater than a preset number of bits; and
in a case that the number of bits of the unicast HARQ-ACK is greater than or equal to the number of bits of the multicast HARQ-ACK.

17. The HARQ-ACK feedback method according to claim 13, wherein in a case that the network-side device receives the unicast HARQ-ACK and the multicast HARQ-ACK that are fed back by the terminal by using the target channel resource for the multicast HARQ-ACK, the unicast HARQ-ACK and the multicast HARQ-ACK are fed back by the terminal by being multiplexed onto the target channel resource for the multicast HARQ-ACK, and the target channel resource is determined based on a total number of bits of the unicast HARQ-ACK and the multicast HARQ.

18. The HARQ-ACK feedback method according to claim 17, wherein the unicast HARQ-ACK and the multicast HARQ-ACK are fed back by the terminal by being multiplexed onto the target channel resource for the multicast HARQ-ACK in a case that the total number of bits of the unicast HARQ-ACK and the multicast HARQ-ACK is greater than a preset number of bits.

19. The HARQ-ACK feedback method according to claim 17 or 18, wherein the target channel resource comprises a third channel resource corresponding to a multicast dynamic HARQ-ACK and/or a fourth channel resource corresponding to a multicast semi-persistent scheduling HARQ-ACK; and the unicast HARQ-ACK and the multicast HARQ-ACK are fed back by the terminal by being multiplexed onto the third channel resource corresponding to the multicast dynamic HARQ-ACK, wherein the multicast HARQ comprises a multicast dynamic HARQ-ACK; or
the unicast HARQ-ACK and the multicast HARQ-ACK are fed back by the terminal by being multiplexed onto the fourth channel resource corresponding to the multicast semi-persistent scheduling HARQ-ACK, wherein the multicast HARQ-ACK comprises only the multicast semi-persistent scheduling HARQ-ACK.

20. The HARQ-ACK feedback method according to claim 19, wherein the multicast HARQ-ACK comprises a HARQ-ACK with a feedback mode being an acknowledgement ACK or non-acknowledgement NACK mode.

21. The HARQ-ACK feedback method according to any one of claims 13 to 20, wherein the target channel resource comprises: a fifth channel resource; the fifth channel resource and a third channel resource corresponding to a multicast dynamic HARQ-ACK, or the fifth channel resource and a fourth channel resource corresponding to a multicast semi-persistent scheduling HARQ-ACK are configured based on different configuration parameters; and in a case that the network-side device receives the multicast HARQ-ACK that is fed back by the terminal by using the target channel resource for the multicast HARQ-ACK, the multicast HARQ-ACK is fed back by using the fifth channel resource for the multicast HARQ-ACK after the terminal discards the unicast HARQ-ACK in at least one of the following cases:
in a case that the third channel resource corresponding to the multicast dynamic HARQ-ACK and/or the fourth channel resource corresponding to the multicast semi-persistent scheduling HARQ-ACK is not configured for the terminal;
in a case that the total number of bits of the unicast HARQ-ACK and the multicast HARQ-ACK is greater than a preset number of bits; and
in a case that the number of bits of the unicast HARQ-ACK is less than or equal to the number of bits of the multicast HARQ-ACK.

22. The HARQ-ACK feedback method according to any one of claims 13 to 21, wherein the method further comprises:
receiving, by the network-side device, the unicast HARQ-ACK and a remaining multicast HARQ-ACK, obtained by partially discarding the multicast HARQ-ACK, that are fed back by the terminal; wherein the partially discarded multicast HARQ-ACK is discarded in a case that the first channel resource for the unicast HARQ-ACK is configured for the terminal and that a transmission code rate of the unicast HARQ-ACK and the multicast HARQ-ACK is greater than a preset code rate; a transmission code rate of the unicast HARQ-ACK and a remaining multicast HARQ-ACK is less than or equal to the preset code rate; and the unicast HARQ-ACK and the remaining multicast HARQ-ACK are fed back by the terminal by being multiplexed onto the first channel resource for the unicast HARQ-ACK or the target channel resource for the multicast HARQ-ACK.

23. The HARQ-ACK feedback method according to any one of claims 13 to 21, wherein the method further comprises:
receiving, by the network-side device, the unicast HARQ-ACK fed back by the terminal after all the multicast HARQ-ACK is discarded; wherein the multicast HARQ-ACK is discarded in a case that the first channel resource for the unicast HARQ-ACK is configured for the terminal, that a transmission code rate of the unicast HARQ-ACK and the multicast HARQ-ACK is greater than a preset code rate, and that a transmission code rate of the unicast HARQ-ACK is less than or equal to the preset code rate; and the unicast HARQ-ACK is fed back by the terminal by using the first channel resource for the unicast HARQ-ACK.

24. The HARQ-ACK feedback method according to any one of claims 13 to 21, wherein the method further comprises:
receiving, by the network-side device, the unicast HARQ-ACK and the multicast HARQ-ACK that are fed back by the terminal; wherein the unicast HARQ-ACK and the multicast HARQ-ACK are fed back by being multiplexed onto the first channel resource for the unicast HARQ-ACK in a case that the first channel resource for the unicast HARQ-ACK is configured for the terminal and that a transmission code rate of the unicast HARQ-ACK and the multicast HARQ-ACK is less than or equal to a preset code rate.

25. A hybrid automatic repeat request acknowledgement HARQ-ACK feedback apparatus, comprising:
a feedback module, configured to: in a case that a first channel resource for a unicast HARQ-ACK is not configured for a terminal, feed back, by using a target channel resource for a multicast HARQ-ACK, the unicast HARQ-ACK and the multicast HARQ-ACK or feed back the multicast HARQ-ACK to a network-side device; or
in a case that the first channel resource for the unicast HARQ-ACK is not configured for the terminal, feed back, by using a second channel resource for the unicast HARQ-ACK, the unicast HARQ-ACK and the multicast HARQ-ACK or feed back the unicast HARQ-ACK to the network-side device; wherein
the unicast HARQ-ACK and the multicast HARQ-ACK have a same priority and are fed back in a same time unit, and the first channel resource and the second channel resource are configured based on different configuration parameters.

26. A hybrid automatic repeat request acknowledgement HARQ-ACK feedback apparatus, comprising:
a receiving module, configured to receive a unicast HARQ-ACK and a multicast HARQ-ACK that are fed back or a multicast HARQ-ACK fed back by a terminal by using a target channel resource for the multicast HARQ-ACK, wherein the unicast HARQ-ACK and the multicast HARQ-ACK, or the multicast HARQ-ACK are fed back in a case that a first channel resource for the unicast HARQ-ACK is not configured for the terminal; or
receive a unicast HARQ-ACK and a multicast HARQ-ACK that are fed back or a unicast HARQ-ACK fed back by the terminal by using a second channel resource for the unicast HARQ-ACK, wherein the unicast HARQ-ACK and the multicast HARQ-ACK, or the unicast HARQ-ACK are fed back in a case that the first channel resource for the unicast HARQ-ACK is not configured for the terminal; wherein
the unicast HARQ-ACK and the multicast HARQ-ACK have a same priority and are fed back in a same time unit, and the first channel resource and the second channel resource are configured based on different configuration parameters.

27. A terminal, comprising a processor and a memory, wherein a program or instructions capable of running on the processor are stored in the memory, and when the program or the instructions are executed by the processor, the steps of the hybrid automatic repeat request acknowledgement feedback method according to any one of claims 1 to 12 are implemented.

28. A network-side device, comprising a processor and a memory, wherein a program or instructions capable of running on the processor are stored in the memory, and when the program or the instructions are executed by the processor, the steps of the hybrid automatic repeat request acknowledgement feedback method according to any one of claims 13 to 24 are implemented.

29. A readable storage medium, wherein the readable storage medium stores a program or instructions, and when the program or the instructions are executed by a processor, the steps of the hybrid automatic repeat request acknowledgement feedback method according to any one of claims 1 to 12 are implemented, or the steps of the hybrid automatic repeat request acknowledgement feedback method according to any one of claims 13 to 24 are implemented.
